(19) Europäisches Patentamt
European Patent Office
Office européen des brevets

(11) EP 1 184 406 A2

(12) # EUROPÄISCHE PATENTANMELDUNG

(43) Veröffentlichungstag:
**06.03.2002 Patentblatt 2002/10**

(51) Int Cl.[7]: **C08J 3/16**, C04B 24/24

(21) Anmeldenummer: **01120019.3**

(22) Anmeldetag: **20.08.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **21.08.2000 DE 10040826**

(71) Anmelder: **BASF AKTIENGESELLSCHAFT
67056 Ludwigshafen (DE)**

(72) Erfinder:
- **Sandor, Mario
67283 Obrigheim/Albisheim (DE)**
- **Pakusch, Joachim
67364 Speyer (DE)**
- **Sack, Heinreich
67454 Hassloch (DE)**
- **Koppers, Markus
67133 Maxdorf (DE)**
- **Denu, Hans-Jürgen
67159 Friedelsheim (DE)**
- **Gulden, Rolf
67227 Frankenthal (DE)**

(74) Vertreter: **Kinzebach, Werner, Dr. et al
Patentanwälte, Reitstötter, Kinzebach & Partner,
Ludwigsplatz 4
67059 Ludwigshafen (DE)**

(54) **Verfahren zur Herstellung von Polymerpulvern**

(57) Die Erfindung betrifft ein Verfahren zur Herstellung von Polymerpulvern durch Verdampfen der flüchtigen Bestandteile aus wässrigen Dispersionen filmbildender Polymere P in Gegenwart von Trocknungshilfsmitteln T, die ausgewählt sind unter den Salzen von oligomeren Arylsulfonäure-Formaldehyd-Kondensationsprodukten, das dadurch gekennzeichnet ist, dass die wässrige Polymerdispersion vor dem Verdampfen der flüchtigen Bestandteile wenigstens 1,5 Gew.-%, vorzugsweise wenigstens 1,7 Gew.-%, bezogen auf das Polymer in der Dispersion, wenigstens einer anionische oberflächenaktive Verbindung AO enthält, die wenigstens eine $C_6$-$C_{32}$-Alkylgruppe aufweist, die nach dem Verfahren erhältlichen Polymerpulver und deren Verwendung in mineralischen Bindebaustoffen.

EP 1 184 406 A2

## Beschreibung

Die vorliegende Erfindung betrifft ein Verfahren zur Herstellung von Polymerpulvern durch Verdampfen der flüchtigen Bestandteile aus wässrigen Dispersionen filmbildender Polymere P in Gegenwart von Trocknungshilfsmitteln T, die ausgewählt sind unter den Salzen von oligomeren Arylsulfonäure-Formaldehyd-Kondensationsprodukten. Sie betrifft auch die nach diesem Verfahren erhältlichen Polymerpulver sowie deren Verwendung.

Wässrige Dispersionen filmbildender Polymere finden breite Anwendung, beispielsweise als Bindemittel, insbesondere für Kunstharzputze oder hochpigmentierte Innenfarben, Klebstoffe oder Beschichtungsmittel. Häufig ist es jedoch erwünscht, nicht die wässrige Polymerdispersion selber, sondern das darin enthaltene Polymer in Pulverform einzusetzen.

Um das filmbildende Polymer in Pulverform zu erhalten, wird die Dispersion einem Trocknungsvorgang unterzogen, bei dem die flüchtigen Bestandteile der Dispersion nach einem geeigneten Verfahren, beispielsweise mittels Sprühtrocknung oder Gefriertrocknung, verdampft werden. Dabei ist zu beachten, dass die Polymerisatteilchen der wässrigen Dispersion beim Verdampfen des wässrigen Dispergiermediums irreversibel miteinander aggregieren und Sekundärteilchen bilden können. Die Sekundärteilchenbildung führt zu einer Vergröberung des Polymerpulvers, was eine schlechtere Redispergierbarkeit, in der Regel einhergehend mit schlechteren anwendungstechnischen Eigenschaften des Pulvers zur Folge hat. Außerdem führt sie zur Belagbildung an den Trocknerwänden und verringert so die Pulverausbeute.

Um die irreversible Sekundärteilchenbildung bei der Pulverherstellung zu verhindern oder zumindest zu verringern, setzt man Trocknungshilfsmittel ein. Diese werden vielfach als auch Sprühhilfsmittel bezeichnet, da die Sprühtrocknung die Bildung irreversibel agglomerierter Sekundärteilchen besonders fördert. Dieser Effekt ist um so ausgeprägter, je niedriger die Glasübergangstemperatur (und damit die Erweichungstemperatur oder die Mindestfilmbildetemperatur) der Polymerteilchen ist, insbesondere dann, wenn sie unterhalb der Trocknungstemperatur liegt.

Gleichzeitig mindern Trocknungshilfsmittel in der Regel die Ausbildung von an der Trocknerwand haftenbleibendem Polymerbelag und bewirken so eine Erhöhung der Pulverausbeute.

Als Trocknungshilfsmittel werden häufig, und nicht zuletzt aufgrund ihres günstigen Preises, die Salze, vorzugsweise die Alkalimetall-, Erdalkalimetall- oder Ammoniumsalze von Kondensationsprodukten aromatischer Sulfonsäuren mit Formaldehyd (Arylsulfonsäure-Formaldehyd-Kondensationsprodukte) eingesetzt.

Die DE-A-24 45 813 beschreibt ein in wässrigen Systemen redispergierbares pulverförmiges Polymer, das als Trocknungshilfsmittel 1 bis 20 Gew.-% eines wasserlöslichen, sulfonsäure- oder sulfonatgruppenhaltigen Kondensationsproduktes aus aromatischen Kohlenwasserstoffen und Formaldehyd, beispielsweise Phenolsulfonsäure- oder Naphthalinsulfonsäure-Formaldehyd-Kondensate, enthält.

Aus der WO 98/03577 sind Salze von Naphthalinsulfonsäure-Formaldehyd-Kondensationsprodukten mit einem zahlenmittleren Molekulargewicht $M_n$ unterhalb 1500 Dalton bekannt, die besonders gute Sprühhilfsmitteleigenschaften aufweisen.

In ähnlicher Weise beschreibt die EP-A-407 889 die Verwendung eines wasserlöslichen Alkali- oder Erdalkalisalzes eines Phenolsulfonsäure-Formaldehyd-Kondensationsproduktes als Sprühhilfsmittel zur Herstellung von in Wasser redispergierbaren Polymerisatpulvern.

Aus der WO 98/03576 sind ebenfallts Salze von Phenolsulfonsäure-Formaldehyd-Kondensationsprodukten bekannt, die ein zahlenmittleres Molekulargewicht $M_n$ unterhalb 1500 Dalton und besonders gute Sprühhilfsmitteleigenschaften aufweisen.

Die Verwendung von Trocknungsmitteln, insbesondere von Arylsulfonsäure-Formaldehyd-Kondensationsprodukten, hat jedoch den Nachteil, dass die für die Anwendung erforderliche Filmbildung der Pulverteilchen im redispergierten Zustand nachteilig beeinflusst wird.

Der vorliegenden Erfindung liegt somit die Aufgabe zugrunde, ein Verfahren zur Herstellung von Polymerpulvern bereit zu stellen, das bei Einsatz von Trocknungshilfsmistteln auf Basis von oligomeren Arylsulfonäure-Formaldehyd-Kondensationsprodukten Polymerpulver mit besseren Filmbildungseigenschaften liefert.

Diese Aufgabe wurde überraschenderweise durch ein Verfahren gelöst, bei dem man das Pulver aus einer wässrigen Polymerdispersion herstellt, die neben den oligomeren Arylsulfonäure-Formaldehyd-Kondensationsprodukten wenigstens 1,5 Gew.-%, bezogen auf das Polymer in der Dispersion, wenigstens einer anionische oberflächenaktive Verbindung AO enthält, welche wenigstens eine $C_6$-$C_{32}$-Alkylgruppe aufweist.

Demnach betrifft die vorliegende Erfindung ein Verfahren zur Herstellung von Polymerpulvern durch Verdampfen der flüchtigen Bestandteile aus wässrigen Dispersionen filmbildender Polymere P in Gegenwart von Trocknungshilfsmitteln T, die ausgewählt sind unter den Salzen von oligomeren Arylsulfonäure-Formaldehyd-Kondensationsprodukten, das dadurch gekennzeichnet ist, dass die wässrige Polymerdispersion vor dem Verdampfen der flüchtigen Bestandteile wenigstens 1,5 Gew.-%, vorzugsweise wenigstens 1,7 Gew.-%, bezogen auf das Polymer in der Dispersion, wenigstens einer anionische oberflächenaktive Verbindung AO enthält, die wenigstens eine $C_6$-$C_{32}$-Alkylgruppe aufweist.

Filmbildend bedeutet, dass die Polymerteilchen der wässrigen Dispersion bzw. die Pulverteilchen in einem wässrigen Redispergat beim Verdampfen des Wassers (Trocknen) oberhalb einer für sie spezifischen Temperatur, der Mindestfilmbildetemperatur MFT, verschmelzen und einen zusammenhängenden Polymerfilm bilden. Wässriges Redispergat bedeutet eine wässrige Dispersion des Polymerpulvers.

In der Regel wird die Menge der anionischen oberflächenaktiven Verbindung AO, bezogen auf das Polymer in der Dispersion, 10 Gew.-% und vorzugsweise 5 Gew.-% nicht überschreiten. Insbesondere liegt sie im Bereich von 1,5 bis 4 Gew.-% und besonders bevorzugt im Bereich von 1,7 bis 3 Gew.-%.

Erfindungsgemäß geeignete Verbindungen AO sind Salze solcher Verbindungen, die wenigstens eine $C_6$-$C_{32}$-Alkylgruppe, insbesondere eine $C_8$-$C_{22}$-Alkylgruppe und eine zur Salzbildung mit einer Base geeignete Funktionalität, z. B. eine Carboxylat-, Sulfonat-, Phosphonat-, Phosphat- oder Sulfatgruppe, vorzugsweise eine Sulfonatgruppe aufweisen. Bevorzugte Salze weisen als Gegenionen Alkalimetall-, Erdalkalimetall- oder Ammoniumionen und insbesondere Natrium-, Kalium- oder Calciumionen auf. Besonders bevorzugt sind die Natriumsalze. Derartige Verbindungen sind aus dem Stand der Technik auch als anionische Emulgatoren bekannt; siehe beispielsweise Houben-Weyl, Methoden der organischen Chemie, Band XIV/1, Makromolekulare Stoffe, Georg-Thieme-Verlag, Stuttgart, 1961, S. 192-208.

Hier und im Folgenden beziehen sich die Ausdrücke $C_n$-$C_m$ auf die im Rahmen der Erfindung mögliche Anzahl der Kohlenstoffe einer jeweiligen Verbindungsklasse. Alkylgruppen können linear oder verzweigt sein. $C_n$-$C_m$-Alkylaryl steht für Arylgruppen die einen $C_n$-$C_m$-Alkylrest tragen.

Beispiele für geeignete Verbindungen AO sind Salze von Alkylsulfaten, die von linearen oder verzweigten Alkoholen, z. B. Fett- oder Oxoalkoholen abgeleitet sind (Alkylrest: $C_8$-$C_{32}$), von Schwefelsäurehalbestern ethoxylierter Alkanole, die von linearen oder verzweigten Alkoholen, z. B. Fett- oder Oxoalkoholen abgeleitet sind (EO-Grad: 2 bis 50, Alkylrest: $C_8$-$C_{32}$), von Schwefelsäurehalbestern ethoxylierter Alkylphenole mit vorzugsweise linearem Alkylrest (EO-Grad: 2 bis 50, Alkylrest: $C_6$-$C_{22}$), von Alkylsulfonsäuren (Alkylrest: $C_6$-$C_{32}$), von Dialkylestern der Sulfobernsteinsäure (Alkylrest: $C_6$-$C_{32}$) und von Alkylarylsulfonsäuren mit vorzugsweise linearem Alkylrest (Alkylrest: $C_6$-$C_{32}$). Geeignete anionische Emulgatoren sind auch die Salze der Di-$C_6$-$C_{32}$-alkylderivate des Bis(phenylsulfonyl)ethers und deren technische Gemische, die z. B. als DOWFAX® 2A1 der DOW Chemical Co. im Handel sind.

Bevorzugte Verbindungen AO sind die Verbindungen der allgemeinen Formel I,

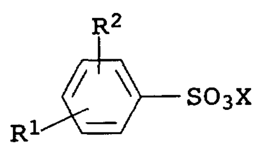

(I)

worin

- $R^1$ für eine $C_6$-$C_{32}$-Alkyl- und vorzugsweise eine $C_8$-$C_{22}$-Alkylgruppe steht,
- $R^2$ für Wasserstoff, $C_1$-$C_4$-Alkyl, einen annellierten Benzolring, der gegebenenfalls mit $C_1$-$C_4$-Alkyl substituiert ist, oder einen Phenoxyrest steht, der gegebenenfalls eine $C_6$-$C_{32}$-Alkylgruppe und/oder eine Sulfonat-Gruppe aufweist, und
- X ein Kationenäquivalent, bedeutet und vorzugsweise für ein Alkalimetallkation, insbesondere für ein Natrium- oder Kaliumion, für ein Äquivalent eines Erdalkalimetallkations, insbesondere 1/2 $Ca^{2+}$ oder für ein Ammoniumion steht.

Besonderes bevorzugt steht $R^2$ in Formel I für Wasserstoff. Besonders bevorzugt ist $R^1$ in para-Stellung zur Sulfonatgruppe gebunden.

Bevorzugte Verbindungen sind weiterhin die vorstehend erwähnten Salze von Alkylsulfonsäuren, worin die gruppe 6 bis 32 und vorzugsweise 10 bis 20 C-Atome aufweist ($C_6$-$C_{32}$- bzw. $C_{10}$-$C_{20}$-Alkylsulfonate). Der Alkylrest in den Alkylsulfonaten kann linear oder verzweigt sein. Die Sulfonatgruppe kann, beispielsweise an dem terminalen C-Atom, dem dazu vicinalen C-Atom oder an einem anderen C-Atom des Alkylrests positioniert sein.

Bevorzugte Verbindungen AO sind weiterhin die Salze von Bis-$C_6$-$C_{32}$-alkylestern und insbesondere von Bis-$C_6$-$C_{32}$-alkylestern von gesättigten, sulfonierten Dicarbonsäuren mit 3 bis 10 C-Atomen, z. B. Verbindungen der Formel II

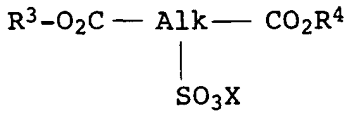

(II)

worin $R^3$ und $R^4$ unabhängig voneinander für einen linearen oder verzweigten Alkylrest mit 6 bis 32 und vorzugsweise 6 bis 24 und insbesondere mit 6 bis 12 C-Atomen stehen; Alk eine $C_1$-$C_8$-Alkylengruppe oder eine $C_5$-$C_8$-Cycloalkylengruppe bedeutet und X die zuvor genannte Bedeutung hat.

Alkylen steht in diesem Zusammenhang für einen bivalenten, aliphatisch gesättigten Kohlenwasserstoffrest, z. B. für Methylen, 1,2-Ethylen, 1,2- oder 1,3-Propylen (Propandiyl), 1,2-, 1,3-, 2,3- oder 1,4-Butylen (Butandiyl), 1,2-, 1,3-, 2,3-, 1,4- oder 1,5-Pentylen (Pentadiyl), 1,6-Hexylen (Hexandiyl) und dergleichen.

Cycloalkylen steht hier für einen bivalenten, gesättigten cycloaliphatischen Rest, z. B. für 1,2-, 1,3- oder 1,4-Cyclohexandiyl.

Vorzugsweise steht Alk für 1,2-Ethylen. In diesem Fall handelt es sich bei den Verbindungen der Formel II um die Salze von Bis-$C_6$-$C_{32}$-alkylestern der Sulfobernsteinsäure. Unter den Verbindungen der Formel II sind die Bis-$C_6$-$C_{10}$- und insbesondere die Bis-$C_6$-$C_{12}$-alkylester der Sulfobernsteinsäure bevorzugt. Beispiele hierfür sind die Salze, insbesondere die Natriumsalze des Bis-n-octylsulfosuccinats, des Bis-iso-octylsulfosuccinats und des Bis-(2-ethylhexyl)-sulfosuccinats.

Die Verbindung AO kann der zu trocknenden Polymerdispersion während des Trocknungsvorgangs oder vorzugsweise vorher zugesetzt werden. Ein Teil oder die Gesamtmenge von AO kann auch während der Herstellung der wässrigen Polymerdispersion zugesetzt werden, und sofern die Herstellung durch radikalische wässrige Emulsionspolymerisation erfolgt, als Emulgator für die zu polymerisierende Monomeremulsion. Vorzugsweise werden wenigstens 1 Gew.-% AO, bezogen auf das Polymer, bzw. wenigstens 2/3 und insbesondere wenigstens 3/4 der Gesamtmenge von AO, der wässrigen Polymerdispersion im Anschluss an ihre Herstellung zugesetzt. Bei den zugesetzten Verbindungen handelt es sich vorzugsweise um die als bevorzugt angegebenen Verbindungen AO mit Sulfonatgruppen.

Neben den genannten Verbindungen AO kann die im erfindungsgemäßen Verfahren eingesetzte Polymerdispersion auch nichtionische oberflächenaktiver Verbindungen (nichtionische Emulgatoren) enthalten. Bevorzugte nichtionische Emulgatoren sind araliphatische Emulgatoren, beispielsweise ethoxylierte Mono-, Di- und Trialkylphenole (EO-Grad: 3 bis 50, Alkylrest: $C_6$-$C_{32}$), oder aliphatische Emulgatoren auf Basis alkylsubstituierter Aromaten, beispielsweise Ethoxylate langkettiger Alkohole, z. B. von Oxo- oder Fettalkoholen (EO-Grad: 3 bis 50, Alkylrest: $C_8$-$C_{32}$). Diese Emulgatoren können in der Polymerdispersion in Mengen bis 10 Gew.-%, vorzugsweise bis 4 Gew.-% und insbesondere bis 2 Gew.-%, z. B. 0,1 bis 10, vorzugsweise 0,1 bis 4 Gew.-% und insbesondere 0,2 bis 2 Gew.-% enthalten sein.

Die im erfindungsgemäßen Verfahren als Trocknungshilfsmittel T eingesetzten Salze von Arylsulfonsäure-Formaldehyd-Kondensaten sind aus dem Stand der Technik bekannt, beispielsweise aus den eingangs zitierten Schriften, auf die hiermit in vollem Umfang bezug genommen wird.

Bevorzugt sind hierunter die Salze von Arylsulfonsäure-Formaldehyd-Kondensationsprodukten, insbesondere von Naphthalinsulfonsäure-Formaldehyd-Kondensationsprodukten, die ein zahlenmittleres Molekulargewicht $M_n$ unterhalb 1500 Dalton und insbesondere im Bereich von 600 bis 1200 Dalton aufweisen. Diese bevorzugten Trocknungshilfsmittel T sind in der WO 98/03577 und WO 98/03756 offenbart, auf die hiermit Bezug genommen wird. Die Uneinheitlichkeit (definiert als $M_w/M_n$) dieser bevorzugten Trocknungshilfsmittel T liegt vorzugsweise im Bereich von 5 bis 15 und insbesondere im Bereich von 5 bis 11. Der Anteil an Kondensaten mit Molmassen oberhalb 10.000 Dalton macht in diesen bevorzugten Trocknungshilfsmitteln vorzugsweise weniger als 25 Gew.-%, insbesondere weniger als 20 Gew.-% des gesamten Kondensationsprodukts aus. Das hier angegebene Molekulargewicht bezieht sich hierbei auf durch Gelpermeationschromatographie bestimmten Werte, wie sie in den Beispielen der WO 98/03577 und WO 98/03756 beschrieben wurde.

In der Regel wird das Trocknungshilfsmittel in einer Menge von 1 bis 50 Gew.-%, vorzugsweise 2 bis 30 Gew.-% und insbesondere 5 bis 20 Gew.-%, bezogen auf das Polymer P der Dispersion zugesetzt.

Als Polymere für die erfindungsgemäßen Polymerpulver kommen im Wesentlichen alle filmbildenden Polymere in Betracht, die wässrige Dispersionen bilden oder als wässrige Dispersion hergestellt werden können. Üblicherweise handelt es sich um Polymere, die aus ethylenisch ungesättigten Monomeren aufgebaut sind, beispielsweise aus:

(a) 80 bis 100 Gew.-% wenigstens eines Monomers, das ausgewählt ist unter vinylaromatischen Verbindungen, Estern aus $\alpha,\beta$-monoethylenisch ungesättigten $C_3$-$C_6$-Carbonsäuren und $C_1$-$C_{12}$-Alkanolen, vorzugsweise $C_1$-$C_8$-Alkanolen, Vinyl- und Allylestern von $C_1$-$C_{12}$-Carbonsäuren und konjugierten $C_4$-$C_{10}$-Diolefinen, und
(b) 0 bis 20 Gew.-% wenigstens eines sonstigen Monomers, das wenigstens eine ethylenisch ungesättigte Gruppe aufweist.

Alle Mengenangaben für Monomere sind auf 100 Gew.-%, d. h. auf die Gesamtmenge der zu polymerisierenden Monomere bezogen.

Beispiele für vinylaromatische Verbindungen sind Styrol, α-Methylstyrol, $C_1$-$C_4$-Alkylstyrole wie o-Vinyltoluol und tert.-Butylstyro.

Bei den Estern von α,β-monoethylenisch ungesättigten Carbonsäuren handelt es sich insbesondere um Ester der Acrylsäure und der Methacrylsäure. Beispiele für solche Ester sind Methyl(meth)acrylat, Ethyl(meth)acrylat, n-Propyl(meth)acrylat, iso-Propyl-(meth)acrylat, n-Butyl(meth)acrylat, iso-Butyl(meth)acrylat, t-Butyl(meth)acrylat, 2-Ethylhexyl(meth)acrylat, n-Decyl(meth)-acrylat oder Dodecyl(meth)acrylat.

Brauchbare Vinyl- und Alkylester sind Vinylacetat, Vinylpropionat, Vinyl-n-butyrat, Vinyllaurat und Vinylstearat sowie die entsprechenden Allylester.

Geeignete konjugierten $C_4$-$C_{10}$-Diolefine sind z. B. Butadien und Isopren.

Beispiele für die Monomere (b) sind:

- ethylenisch ungesättigte Monomere mit Säuregruppe wie Mono- und Dicarbonsäuren mit 3 bis 8 C-Atomen wie Acrylsäure, Methacrylsäure, Crotonsäure, Acrylamidoglykolsäure, Vinylessigsäure, Maleinsäure, Itaconsäure und die Halbester der Maleinsäure mit $C_1$-$C_4$-Alkanolen, ethylenisch ungesättigte Sulfonsäuren wie Vinylsulfonsäure, Allylsulfonsäure, Styrolsulfonsäure, 2-Acrylamidomethylpropansulfonsäure, und ethylenisch ungesättigte Phosphonsäuren, z. B. Vinylphosphonsäure, Allylphosphonsäure, Styrolphosphonsäure und 2-Acrylamido-2-Methylpropanphosphonsäure und ihre wasserlöslichen Salze, beispielsweise ihre Alkalimetallsalze, vorzugsweise Acrylsäure und Methacrylsäure. Derartige Monomere können in den Polymeren P in einer Menge von bis zu 10 Gew.-%, z.B 0,1 bis 10 Gew.-%, vorzugsweise 0,1 bis 4 Gew.-%, enthalten sein;

- Amide ethylenisch ungesättigter Carbonsäuren, wie Acrylamid und Methacrylamid, sowie die N-Alkylolamide, vorzugsweise die N-Methylolamide ethylenisch ungesättigter Carbonsäuren, wie N-Methylolacrylamid und N-Methylolmethacrylamid. Derartige Monomere können in den Polymeren P in einer Menge von bis zu 10 Gew.-%, z.B 0,1 bis 10 Gew.-%, vorzugsweise 0,1 bis 4 Gew.-%, enthalten sein;

- Hydroxyalkylester ethylenisch ungesättigter Carbonsäuren, insbesondere Hydroxyethyl- und Hydroxypropylester, z. B. Hydroxyethylacrylat, Hydroxypropylacrylat, Hydroxyethylmethacrylat und Hydroxypropylmethacrylat. Derartige Monomere können in den Polymeren P in einer Menge von bis zu 10 Gew.-%, z.B 0,1 bis 10 Gew.-%, vorzugsweise 0,5 bis 5 Gew.-%, enthalten sein

- Acrylnitril und Methacrylnitril. Derartige Monomere können in den Polymeren P in einer Menge von bis zu 10 Gew.-%, z. B. 0,5 bis 10 Gew.-% enthalten sein.

- Reaktive Monomere: Zu den reaktiven Monomeren zählen solche, die eine zur Vernetzung geeignete reaktive Funktionalität aufweisen. Hierzu zählen neben den vorgenannten ethylenisch ungesättigten Carbonsäuren, ihren N-Alkylolamiden und Hydroxyalkylestern Monomere, die eine Carbonylgruppe oder eine Epoxygruppe aufweisen, beispielsweise N-Diacetonacrylamid, N-Diacetonmethacrylamid, Acetylacetoxyethylacrylat und Acetylacetoxyethylmethacrylat, Glycidylacrylat und Glycidylmethacrylat. Derartige Monomere können in den Polymeren P in einer Menge von bis zu 10 Gew.-%, z. B. 0,5 bis 10 Gew.-% enthalten sein.

- und vernetzende Monomere. Zu den vernetzenden Monomeren zählen solche,die wenigstens zwei nicht konjugierte ethylenisch ungesättigte Bindungen aufweisen, z. B. die Di- und Triacrylate bzw. -methacrylate von Di- und trifunktionellen Alkoholen, z. B. Ethylenglykoldiacrylat, Diethylenglykoldiacrylat, Triethylenglykoldiacrylat, Butandioldiacrylat, Hexandioldiacrylat, Trimethylolpropantriacrylat und Tripropylenglykoldiacrylat. Derartige Monomere können in den Polymeren P in einer Menge von bis zu 2 Gew.-%, vorzugsweise nicht mehr als 1 Gew.-%, z. B. 0,01 bis 2 Gew.-%, vorzugsweise 0,01 bis 1 Gew.-%, enthalten sein. In einer bevorzugten Ausführungsform enthalten die Polymere P kein vernetzendes Monomer einpolymerisiert.

Bevorzugt eignet sich das erfindungsgemäße Verfahren zur Herstellung von Polymerpulvern auf Basis von Styrol-Butadien-Copolymeren. Der Begriff Copolymer ist in diesem Zusammenhang nicht einschränkend zu verstehen und umfasst auch solche Polymere, die neben Styrol und Butadien auch weitere ethylenisch ungesättigte Monomere einpolymerisiert enthalten. Styrol-Butadien-Copolymere sind in der Regel aufgebaut aus:

- 10 bis 90 Gew.-%, vorzugsweise 20 bis 80 Gew-%, insbesondere 40 bis 75 Gew.-% Styrol und gegebenenfalls ein oder mehrere, davon verschiedene vinylaromatische Monomere,

- 10 bis 90 Gew.-%, vorzugsweise 20 bis 80 Gew.-%, insbesondere 25 bis 60 Gew.-% 1,3-Butadien, gegebenenfalls in Mischung mit einem anderen konjugierten Diolefin wie Isopren und gegebenenfalls

- bis 20 Gew.-%, vorzugsweise bis 10 Gew.-%, z. B. 0,1 bis 20 Gew.-%, vorzugsweise 0,1 bis 10 Gew.-% ein oder mehrere der vorgenannten Monomere (b)

Das Gewichtsverhältnis von vinylaromatischen Monomeren zu Butadien liegt in der Regel im Bereich von 1:9 bis 9:1, insbesondere im Bereich von 4:1 bis 1:4 und ganz besonders bevorzugt im Bereich von 3:1 bis 1:1.
In einer bevorzugten Ausführungsform der vorliegenden Erfindung ist das Polymer P aufgebaut aus:

- 20 bis 80 Gew.-%, insbesondere 40 bis 75 Gew.-% Styrol

- 20 bis 80 Gew.-%, insbesondere 25 bis 60 Gew.-% Butadien, und gegebenenfalls

- 0,1 bis 10 Gew.-%, vorzugsweise 0,1 bis 5 Gew.-% Carboxylgruppen enthaltendende Monomdere, insbesondere Acrylsäure, Methacrylsäure und/oder Itaconsäure.

Besonders geeignet ist das erfindungsgemäße Verfahren zur Herstellung von Polymerpulvern, bei denen das Polymer in der Dispersion eine Glasübergangstemperatur (DSC, midpoint temperature, ASTM D 3418-82) 65°C, insbesondere 50°C, besonders bevorzugt 30°C nicht überschreitet. Im allgemeinen ist die Glasübergangstemperatur der Polymere wenisgstens -60°C, vorzugsweise wenisgstens -40°C und insbesondere wenisgstens -20°C. Die Glasübergangstemperatur eines Polymeren entspricht nährungsweise der Mindestfilmbildetemperatur oder liegt etwas darüber.
Dabei ist es oft hilfreich, die Glasübergangstemperatur $T_g$ des dispergierten Polymers abzuschätzen. Nach Fox (T.G. Fox, Bull. Am. Phys. Soc. (Ser. II) 1, 123 [1956] und Ullmanns Encyklopädie der technischen Chemie, Weinheim (1980), S. 17, 18) gilt für die Glasübergangstemperatur von Mischpolymerisaten bei großen Molmassen in guter Nährung

$$\frac{1}{T_g} = \frac{X^1}{T_g^{\ 1}} + \frac{X^2}{T_g^{\ 2}} + \cdots \frac{X^n}{T_g^{\ n}}$$

wobei $X^1$, $X^2$, ..., $X^n$ die Massenbrüche 1, 2, ..., n und $T_g^1$, $T_g^2$, ..., $T_g^n$ die Glasübergangstemperaturen der jeweils nur aus einem der Monomeren 1, 2, ..., n aufgebauten Polymeren in Grad Kelvin bedeuten. Letztere sind z.B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed., J. Wiley, New York 1989 bekannt.
Bevorzugte Polymerisatdispersionen sind weiterhin solche, bei denen der gewichtsmittlere Durchmesser $d_w$ der dispergierten Polymerisatpartikel ≥100 nm. Üblicherweise ist der gewichtsmittlere Durchmesser $d_w$ ≤2000 nm.
Der $d_w$-Wert der Teilchengröße wird wie üblich definiert als das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wird. Die Ultrazentrifugenmessung liefert die integrale Massenverteilung des Teilchendurchmessers einer Probe. Hieraus läßt sich entnehmen, wieviele Gewichtsprozent der Teilchen einen Durchmesser gleich oder unter einer bestimmten Größe haben.
Die Herstellung der zu trocknenden Polymerisatdispersionen ist bekannt und erfolgt bei Polymeren, die aus ethylenisch ungesättigten Monomeren aufgebaut sind, in der Regel mittels einer radikalischen wässrigen Emulsionspolymerisation, d.h. die Monomere werden in einer wässrigen Emulsion in Gegenwart oberflächenaktiver Substanzen und wenigstens einem Radikalstarter polymerisiert.
Als Radikalstarter (Polymerisationsinitiatoren) kommen alle diejenigen Verbindungen in Betracht, die in der Lage sind, eine radikalische, wässrige Emulsionspolymerisation auszulösen. Hierzu zählen sowohl organische, wie anorganische Peroxide und Hydroperoxide, als auch Azoverbindungen. Ebenfalls geeignet sind Redoxinitiatorsysteme, die in der Regel eine Peroxidverbindung und ein Reduktionsmittel, beispielsweise Ascorbinsäure, Hydroxymethansulfinsäure, Bisulfit-Addukt an Aceton, Natriumsulfit oder -hydrogensulfit, und/oder ein Übergangsmetallion, das seine Wertigkeit ändern kann, z.B. in Form wasserlöslicher Salze wie Eisen-, Vanadium- oder Kupfer-Salze und wasserlösliche Komplexe davon, umfassen. Bevorzugte Initiatorsysteme sind die Peroxide und Hydroperoxide wie Wasserstoffperoxid, tert.-Butylhydroperoxid, und Isopropylhydroperoxid. Bevorzugte Initiatoren sind auch die Salze der Peroxidischwefelsäure, insbesondere deren Alkalimetallsalze (z. B. Kalium- und Natriumsalz) und/oder deren Ammoniumsalze. Üblicherweise wird der Radikalstarter in einer Menge von 0,1 bis 3 Gew.-%, bezogen auf die zu polymerisierende Monomere eingesetzt.
Als oberflächenaktive Substanzen kommen sowohl Schutzkolloide, d. h. wasserlösliche Polymere mit einem

Molekulargewicht $M_n \geq 2000$, als auch die vorgenannten anionischen oder neutralen oberflächenaktiven Verbindungen (Emulgatoren) in Betracht, die im Unterschied zur den Schutzkolloiden in der Regel ein Molekulargewicht $M_n < 2000$ und insbesondere < 1000 aufweisen. Die grenzflächenaktiven Substanzen werden üblicherweise in Mengen bis zu 10 Gew.-%, vorzugsweise 0,1 bis 5 Gew.-%, bezogen auf die zu polymerisierenden Monomere, eingesetzt, wobei anionische Emulgatoren (Verbindungen AO) in der Regel nicht mehr als 1 Gew.-%, z.B. 0,1 bis 1 Gew-% der zu polymerisierenden Monomere ausmachen.

Geeignete Schutzkolloide sind Polyvinylalkohole, Stärke- und Cellulosederivate, Polyacrylsäuren, Copolymerisate der Acrylsäure und der Methacrylsäure mit hydrophoben Monomeren und/oder mit Hydroxylgruppen tragenden Monomeren, Polyacrylamid oder Vinylpyrrolidon enthaltende Polymerisate.

Zur Einstellung des gewünschten Molekulargewichtes können bei der Polymerisation geringe Mengen, z.B. 0,01 bis 2 Gew.-%, bezogen auf die zu polymerisierenden Monomere, regelnde Substanzen mitverwendet werden. Geeignete Regler sind z.B. Verbindungen, die eine Thiolgruppe und/oder eine Silangruppe aufweisen (z.B. t-Dodecyl-, n-Dodecylmercaptan oder Mercaptopropyltrimethoxysilan), Allylalkohole oder Aldehyde, wie Formaldehyd, Acetaldehyd und vergleichbare.

Die Emulsionspolymerisation kann sowohl kontinuierlich als auch nach der Batchfahrweise, vorzugsweise nach einem halbkontinuierlichen Verfahren erfolgen. Dabei können die zu polymerisierenden Monomere kontinuierlich, einschließlich Stufen- oder Gradientenfahrweise, dem Polymerisationsansatz zugeführt werden. Zu diesem Zweck kann man die Monomeren sowohl als Monomermischung als auch als wässrige Monomeremulsion der Polymerisation zuführen

Neben der saatfreien Herstellungsweise kann zur Einstellung einer definierten Polymerteilchengröße die Emulsionspolymerisation nach dem Saatlatex-Verfahren oder in Gegenwart von in situ hergestellten Saatlatex erfolgen. Verfahren hierzu sind bekannt und können dem Stand der Technik entnommen werden (siehe EP-B 40419 sowie 'Encyclopedia of Polymer Science and Technology', Vol. 5, John Wiley & Sons Inc., New York 1966, S. 847).

In einer bevorzugten Ausführungsform der vorliegenden Erfindung wird die Polymerisation in Anwesenheit von 0,01 bis 3 Gew.-% und insbesondere 0,05 bis 1,5 Gew.-% eines Saatlatex (Feststoffgehalt des Saatlatex, bezogen auf Gesamtmonomermenge), vorzugsweise mit vorgelegtem Saatlatex (Vorlagensaat) durchgeführt. Der Latex weist in der Regel eine gewichtsmittlere Teilchengröße von 10 bis 400 nm, vorzugsweise 20 bis 120 nm und insbesondere 20 bis 50 nm auf. Seine konstituierenden Monomere sind beispielsweise Styrol, Methylmethacrylat, n-Butylacrylat und Mischungen davon, wobei der Saatlatex in untergeordnetem Maße auch ethylenisch ungesättigte Carbonsäuren, z. B. Acrylsäure und/oder Methacrylsäure und/oder deren Amide, vorzugsweise weniger als 10 Gew.-%, bezogen auf das Gesamtgewicht der Polymerisatteilchen im Saatlatex, einpolymerisiert enthalten kann.

Polymerisationsdruck und Polymerisationstemperatur sind von untergeordneter Bedeutung. Im Allgemeinen arbeitet man bei Temperaturen zwischen Raumtemperatur und 120 °C, vorzugsweise bei Temperaturen von 40 bis 110 °C und besonders bevorzugt zwischen 50 und 100 °C bei einem Druck im Bereich von 1 bis 10 bar.

Im Anschluss an die eigentliche Polymerisationsreaktion ist es gegebenenfalls erforderlich, die erfindungsgemäßen, wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z. B. in der DE-A 44 35 423, DE-A 44 19 518 sowie in der DE-A 44 35 422 aufgeführt sind, erfolgen. Bevorzugt wird die Nachpolymerisation mit einem Redoxinitiatorsystem aus wenigstens einem organischen Peroxid und einem organischen Sulfit durchgeführt.

Auf diesem Wege sind Polymerisatdispersionen mit Polymergehalten bis zu 80 Gew.-%, bezogen auf das Gesamtgewicht der Dispersion, zugänglich. In der Regel wird der Feststoffgehalt der auf diesem Wege hergestellten Polymerisatdispersionen im Bereich von 40 bis 60 Gew.-% liegen. Die so erhältlichen Polymerisatdispersionen können dann, sofern erforderlich, auf den für die Trocknung gewünschten Feststoffgehalt durch Verdünnung mit einem geeigneten Lösungsmittel, beispielsweise mit Wasser oder einer Wasser-Emulgator-Mischung und/oder durch Zugabe einer wässrigen Lösung des Trocknungshilfsmittels eingestellt werden.

Der Feststoffgehalt der zu trocknenden Polymerisatdispersion, die bereits das Trocknungshilfsmittel enthält, liegt in der Regel im Bereich von 10 bis 60 Gew.-%, vorzugsweise im Bereich von 20 bis 55 Gew.-% (jeweils gerechnet als Polymerisat + Trocknungshilfsmittel, bezogen auf das Gesamtgewicht der Dispersion).

Das Verdampfen der flüchtigen Bestandteile aus der wässrigen Polymerisatdispersion (im Folgenden auch als Trocknung bezeichnet) erfolgt in üblicher Weise, beispielsweise durch Gefriertrocknung oder vorzugsweise durch Sprühtrocknung.

Bei der Sprühtrocknung werden die zu trocknenden Polymerisatdispersionen in Gegenwart des Trocknungshilfsmittels in einem Trokkenturm, durch den ein Warmluftstrom geführt wird, getrocknet. Die Temperatur des Warmluftstroms beträgt in der Regel am Eingang des Trockenturms 100 bis 200 °C, vorzugsweise 110 bis 170 °C, und am Turmausgang etwa 30 bis 100 °C, vorzugsweise 50 bis 80 °C. Die zu trocknende Polymerisatdispersion kann gegen

den Warmluftstrom oder vorzugsweise parallel in den Warmluftstrom eingeführt werden. Die Zugabe kann über Ein- oder Mehrstoffdüsen oder über eine rotierende Scheibe erfolgen. Die Abscheidung der Polymerisatpulver erfolgt in üblicher Weise, z.B. unter Verwendung von Zyklonen oder Filterabscheidern.

Grundsätzlich können das Trocknungsmittel T, d. h. die erfindungsgemäßen Salze von Arylsulfonsäure-Formaldehyd-Kondensationsprodukten, sowie gegebenenfalls verwendete, andere Trocknungshilfsmittel des Standes der Technik, z.B. Homo- und Copolymere des Vinylpyrrolidons, Homo- und Copolymere der Acrylsäure und/ oder der Methacrylsäure mit Hydroxylgruppen tragenden Monomeren, vinylaromatischen Monomeren, Olefinen und/oder (Meth)acrylsäureestern, Polyvinylalkohol, während des Trocknungsvorganges in Form von Lösungen, beispielsweise als wässrige oder wässrig-alkoholische Lösungen, der zu trocknenden Polymerdispersion zugegeben werden. Vorzugsweise gibt man das Trocknungshilfsmittel vor der Trocknung zu der Polymerisatdispersion. Das Trocknungsmittel kann sowohl als Feststoff oder vorzugsweise als Lösung, z. B. als wässrig-alkoholische Lösung oder insbesondere als wässrige Lösung, zu der Dispersion gegeben werden. Auch kann man einige der in Betracht kommenden Trocknungshilfsmittel des Standes der Technik bereits während der Herstellung der wässrigen Polymerisatdispersion als Schutzkolloid (siehe oben) einsetzen.

Ferner kann man der zu trocknenden Polymerisatdispersion während des Trocknungsvorganges ein Anticaking-Mittel (Antibackmittel) zusetzen. Hierbei handelt es sich um ein feinteiliges anorganisches Oxid, beispielsweise eine feinteilige Kieselsäure oder ein feinteiliges Silicat, z. B. Talkum. Vorzugsweise weist das feinteilige anorganische Oxid eine mittlere Teilchengrösse im Bereich von 0,01 bis 0,5 µm auf. Besonders bevorzgt wird feinteilige Kieselsäure mit einer mittleren Teilchengröße im Bereich von 0,01 bis 0,5 µm, die sowohl hydrophil als auch hydrophobisiert sein kann. Das Antibackmittel kann vor oder während der Trocknung der Polymerisatdispersion zudosiert werden. In einer anderen Ausführungsform gibt man das Antibackmittel in eine für Feststoffe geeigneten Mischvorrichtung, beispielsweise einem Rüttler, Rollstuhl-Schneckenmischer oder ähnlichem, zu dem Polymerpulver.

Sofern erwünscht, wird man das Antibackmittel in einer Menge von 0,5 bis 15 Gew.-% und vorzugsweise in einer Menge von 2 bis 12 Gew.-%, bezogen auf das Polymerpulver (bzw. auf die Summe an Polymer P + Trocknungshilfsmittel in der wässrigen Polymerisatdispersion), einsetzen.

Die nach dem erfindungsgemässen Verfahren erhaltenen Polymerpulver sind ebenfalls Gegenstand der vorliegenden Erfindung. In Anwesenheit von Wasser, z.B wässrige Redispergate der Polymerpulver, zeichnen sich durch ein verbessertes Filmbildevermögen aus. Überraschenderweise führt das erfindungsgemässe Verfahren auch zu besseren Ergebnissen bei Sprühtrocknung, beispielsweise zu einer erhöhten Pulverausbeute und zu einer verringerten Belagsbildung, als bei Einsatz von Dispersionen, die weniger als 1,5 Gew.-% anionische oberflächenaktive Verbindungen AO enthalten. Andere anwendungstechnische Eigenschaften werden überraschenderweise nicht nachteilig beeinflusst.

Die nach dem erfindungsgemässen Verfahren erhaltenen Polymerpulver umfassen:

- i wenigstens ein filmbildendes Polymer P,
- ii 1 bis 50 Gew.-%, bezogen auf das Polymer P, wenigstens eines Trocknungshilfsmittels T,
- iii wenigstens 1,5 Gew.-%, bezogen auf das Polymer P, wenigstens einer anionischen oberflächenaktiven Verbindung AO,
- iv gegebenenfalls neutrale oberflächenaktive Verbindungen in einer Menge bis 10 Gew.-%, bezogen auf das Polymer P, und
- v gegebenenfalls Füllstoffe, Pigmente, Anticakingmittel und/ oder übliche Hilfsmittel, z.b. Trocknungshilfsmittel des Standes der Technik, Biozide und/oder Entschäumer.

Die erfindungsgemässen Polymerpulver eignen sich als Cobindemittel in mineralischen Bindebaustoffen und gebrauchsfertigen Bindebaustoffzubereitungen, als Bindemittel in Anstrichmitteln, Lakken, Klebstoffen, Beschichtungs- und Dichtungsmassen, Bauklebstoffen, z.B. Fussbodenkleber und insbesondere Fliesenkleber, sowie in Kunstharzputzen.

In besonderer Weise eignen sich die erfindungsgemäß erhältlichen Polymerpulver als Cobindemittel in mineralischen Bindebaustoffen bzw. in gebrauchsfertigen Zubereitungen dieser Baustoffe, sowie in Bauklebstoffen. Diese sind ebenfalls Gegenstand der vorliegenden Erfindung.

Unter mineralischen Bindebaustoffen bzw. ihren Zubereitungen versteht man Zusammensetzungen, die wenigstens ein mineralisches Bindemittel wie Kalk, Gips, Ton und/oder Zement und gegebenenfalls mineralische Zuschläge enthalten. Die gebrauchsfertige Zubereitung wird durch Anrühren mit Wasser in die eigentlichen Baustoffzubereitung überführt, die sich dann, wenn sie sich selbst überlassen ist, an der Luft oder auch unter Wasser, gegebenenfalls unter Einwirkung erhöhter Temperatur steinartig verfestigt. Neben den mineralischen Zuschlägen enthalten mineralische Baustoffzubereitungen auch übliche Hilfsmittel, z. B. je nach Anwendungszweck Verdicker oder Verflüssiger und Entschäumer.

Bevorzugte mineralisches Bindemittel enthalten 70 bis 100 Gew.-% Zement und 0 bis 30 Gew.-% Gips. Insbesondere ist Zement das alleinige mineralische Bindemittel. Die erfindungsgemäße Wirkung ist dabei von der Zementart im wesentlichen unabhängig. Je nach Vorhaben können also Hochofenzement, Ölschieferzement, Portlandzement, hydrophobierter Portlandzement, Schnellzement, Quellzement oder Tonerdezement verwendet werden, wobei sich die Verwendung von Portlandzement als besonders günstig erweist.

In typischer Weise enthalten die Trockenzusammensetzungen mineralischer Bindebaustoffe, bezogen auf die Menge an mineralischem Bindemittel, 0,1 bis 20 Gew.-%, insbesondere 0,5 bis 10 Gew.-% modifizierendes Polymerisatpulver. Der Gewichtsanteil von Polymers zu mineralischem Bindemittel liegt in der Regel im Bereich von 1:100 bis 1:1.

Zur Verbesserung ihrer Verarbeitungseigenschaften setzt man den mineralischen Bindebaustoffen vielfach Cellulosederivate und Microsilica zu. Erste wirken üblicherweise verdickend und letztere bilden normalerweise Thixotropierungsmittel, die die Fließfähigkeit des wäßrigen Mörtels vor seiner Verfestigung im aufgebrachten Ruhestand zusätzlich erniedrigen. Durch Zusatz von Entschäumern (unter dem Aspekt "Trockenmörtel" vorzugsweise in Pulverform) kann im verfestigten Zustand ein praxisgerechter Luftporengehalt (5 bis 20 Vol.-%) des verfestigten zementösen Mörtel erreicht werden.

Sand, z.B. Quarzsand, sowie gegebenenfalls Füllstoffe wie Calciumcarbonat und Pigmente wie Titandioxid oder Eisenoxid, natürliche und synthetische Fasern bilden in der Regel die übrigen Zuschläge.

Bauklebstoffe umfassen z. B. Fussbodenkleber und Fliesenkleber. Sie enthalten als Klebstoffkomponente wenigstens ein erfindungsgemässes Polymerpulver sowie je nach Art der Formulierung Weichmacher, Füllstoffe, Dispergierhilfsmittel, Biozide, sowie gegebenenfalls Wasser, Entschäumer, Verdicker, Thioxotropiermittel und sonstige Zusätze. In einer bevorzugten Ausführungsform enthalten sie auch ein mineralisches Bindemittel, z. B. Zement. Derartige Zubereitungen finden insbesondere als Fliesenkleber Verwendung. Aufgrund des mineralischen Bindemittels zählen sie ebenfalls zu den mineralischen Bindebaustoffen.

Typische mineralische Bindebaustoffe und sonstige Bauklebstoffe wie Fliesenkleber, insbesondere als mineralische Bindebaustofftrockenzubereitung enthalten, (bezogen auf das Gesamtgewicht der in ihnen enthaltenen Feststoffe):

| | |
|---|---|
| 10 bis 60, | vorzugsweise 15 bis 50 Gew.-% mineralischem Bindemittel (vorzugsweise ausschließlich Zement, insbesondere Portlandzement) |
| 0,1 bis 20 | häufig 0,2 bis 15 Gew.-%, insbesondere 0,5 bis 10 Gew.-% speziell 2 bis 8 Gew.-% erfindungsgemässe Polymerpulver, |

bis zu 25 Gew.-% an sich üblichen Hilfsmitteln, z.B. Entschäumer, Verdicker, Verflüssiger und Thixotropiermittel, und als Restmenge 30 bis 80 Gew.-% Zuschläge, z.B. Sand, Füllstoffe (z.B. $CaCO_3$), Pigmente (z.B. $TiO_2$) natürliche und/oder synthetische Fasern. Entschäumer werden in der Regel in einer Menge von 0,1 bis 2 Gew.-%, Thixotropiermitel bis 2 Gew.-%, Verflüssiger bis 1 Gew.-% verwendet.

Typische Ausführungsformen mineralischer Bindebaustoffzubereitungen sind zementöse Reparatur- oder Armierungsmörtel. Hierbei weisen übliche Armierungsmörtel zur Steigerung ihrer Rißüberbrükkungsfähigkeit noch natürliche oder synthetische Fasern aus Materialien wie z.B. Dralon (Länge z.B. 1 bis 10 mm, längenbezogene Masse z.B. 3 bis 10 dtex) in einer Menge von bis zu 10 Gew.-% auf. Eine Übersicht über Hilfststoff und Zuschläge gibt H. Reul in "Handbuch der Bauchemie, Verlag für chemische Industrie, H.Zielkowsky KG, Augsburg, 1991.

Eine weitere bevorzugte Ausführungsform mineralischer Bindebaustoffzubereitungen sind Fliesenkleber. Typische Fliesenkleber enthalten als Trockenzubereitung neben dem Polymerpulver, das, bezogen auf 100 Gew.-% Trokkenzubereitung in der Regel 0,5 bis 10 Gew.-% insbesondere 2 bis 8 Gew.-% ausmacht, 15 bis 50 Gew.-% mineralisches Bindemittel, insbesondere Zement, 30 bis 80 Gew.-% hierfür übliche Zuschläge, insbesondere Quarzsand, z. B. mit einer Sieblinie von 0,063-0,4 mm, und/oder Calciumcarbonat, sowie übliche Hilfsmittel wie Verdicker, Entschäumer, Biozide, Dispergierhilfsmittel, Plastifiziermittel (Weichmacher), Filmbildehilfsmittel etc. in einer Menge von 0,1 bis 25 Gew.-%.

Die nachfolgenden Beispiele erläutern die Erfindung, ohne sie einzuschränken.

I Einsatzmaterialien:

Polymerdispersion D1: Wassrige Styrol-Butadien-Dispersion enthaltend 50 Gew.-% Polymer mit einer Glasübergangstemperatur $T_g$ von 4°C, die 52,3 Gew.% Styrol, 43,2 Gew.-% Butadien und 4,5 Gew.-% Acrylsäure einpolymerisiert enthält und die mit 0,5 Gew.-%, bezogen auf das Polymer eines nichtionischen Emulgators ($C_{12}$-Alkanolethoxilat mit einem Ethoxilierungsgrad von 2 bis 3) stabilisiert ist.

Polymerdispersion D2: Wässrige Styrol-Butadien-Dispersion, enthaltend etwa 50 Gew.-% Polymer, die 42 Gew.-% Butadien, 53 Gew.-% Styrol, 4,5 Gew.-% Acrylsäure und 0,5 Gew.-% Itaconsäure einpolymerisiert enthält und

die mit 0,5 Gew.-%, bezogen auf das Polymer, mit einem anionischen Emulgator (Natriumsalz eines Schwefelsäurehalbesters eines ethoxilierten $C_{12}$-Alkanols mit 2 bis 3 Ethylenoxideinheiten) stabilisiert war und worin die Polymerteilchengröße ($d_{50}$-Wert) bei 130 nm lag und deren Polymer eine Glasübergangstemperatur von etwa 5 °C aufwies.

Trocknungshilfsmittel T1: Naphthtalinsulfonsäure-Formaldehyd-Kondensationsprodukt als Calcium Salz hergestellt nach Beispiel 2.1 (Sprühhilfsmittel S1) der WO 98/03577.

Anionischer Emulgator AO 1: $C_{12}$-Alkylphenylsulfonsäure-Natriumsalz als 15 gew.-%ige wässrige Lösung.

AO2: Natriumsalz des Bis-2-ethylhexylesters der Sulfobernsteinsäure als 60 gew.-%ige wässrige Lösung;

AO3: Natriumsalz eines $C_{10-18}$-Alkylsulfonats als 28 gew.-%ige wässrige Lösung.

Nichtionischer Emulgator NO 1: $C_{16}$-Alkanolethoxilat mit einem Ethoxilierungsgrad von 18 als 28 gew.-%ige wässrige Lösung.

II Herstellung der Polymerpulver:

Allgemeine Herstellungsvorschrift:

Die Herstellung der Polymerpulver erfolgte durch Sprühtrocknung. Zu diesem Zweck versetzte man die Dispersion D1 mit 10 Gewichtsteilen Trocknungshilfsmittel T1 und gegebenfalls Emulgatorlösung gemäß den Angaben der Tabelle 1 und stellte mit Wasser einen Feststoffgehalt von 30 Gew.-% ein.

Die Sprühtrocknung führte man in einem Minor-Labortrockner der Fa. GEA Wiegand GmbH (Geschäftsbereich Niro) mit Zweistoffdüsenzerstäubung (Teflonzweistoffdüse, Spaltweite: 1,3 mm) durch. Die Temperatur des Warmluftstroms am Turmeingang lag bei etwa 130 °C und am Turmausgang bei etwa 60 °C. Die Trocknungsleistung lag bei 2 kg Sprühspeise/h gleichzeitig mit der Sprühspeise wurden 120 g/h einer feinteiligen Kieselsäure als Antibackmittel in die Trocknungskammer eindosiert. Die Ergebnisse der Sprühtrocknung sind in Tabelle 1 zusammengefasst.

III. Anwendungstechnische Prüfung:

Redispergierbarkeit: 30 g des nach II hergestellten Polymerpulvers wurde in einem Standzylinder in 70 ml entionisiertem Wasser dispergiert und 4 Stunden bei Raumtemperatur belassen und anschliessend visuell beurteilt, wie stark sich die Polymerphase von der Wasserphase abgesetzt hatte. Die Ergebnisse sind in Tabelle 1 zusammengestellt.

Verfilmung: Aus den redispergierten Dispersionen wurde ein Polymerfilm gegossen, und anschließend bei Raumtemperatur 4 Tage getrocknet. Die Qualität des Films wurde visuell wie in Tabelle 1 angegeben, beurteilt.

Tabelle 1

| Beispiel | Dispersion | AO | | NO1 3) [Gew.-%] | Sprühtrocknung 4) | Verfilmung 5) | Redispergierbarkeit 6) |
|---|---|---|---|---|---|---|---|
| | | Typ | [Gew.-%] | | | | |
| V1 1) | D1 | AO1 | 0 | 0 | + | --- | o |
| V2 | D1 | AO1 | 0 | 2 | + | --- | o |
| V3 | D1 | AO1 | 0,5 | 0 | + | -- | o |
| 4 | D1 | AO1 | 2 | 0 | +++ | +++ | + |
| V5 | D1 | AO1 | 1 | 0,5 | + | -- | o |

1) V = Vergleichsbeispiel
2) Anionischer Emulgator AO1, gerechnet als Feststoff, bezogen auf Polymer.
3) Nichtionischer Emulgator NO1, gerechnet als Feststoff, bezogen auf Polymer.
4) + Ausbeute > 60 %;
++ Ausbeute > 75 %;
+++ Ausbeute > 90 %.
5) --- kein zusammenhängender Film;
-- vollständig rissig;
- großflächige Schwundrisse;
+ Schwundrisse am Rand;
++ mit Narben verfilmt;
+++ defektfreier, elastischer Film.
6) - sehr viel Sediment, klare Phasentrennung;
o Sediment;
+ kein Sediment.

Tabelle 1 (fortgesetzt)

| Beispiel | Dispersion | AO | | NO1 [3) ] [Gew.-%] | Sprühtrocknung [4)] | Verfilmung [5)] | Redispergierbarkeit [6)] |
|---|---|---|---|---|---|---|---|
| | | Typ | [Gew.-%] | | | | |
| 6 | D2 | AO2 | 2,5 | 0 | +++ | +++ | + |
| 7 | D2 | AO1 | 2,5 | 0 | +++ | +++ | + |
| 8 | D2 | AO3 | 2,5 | 0 | +++ | +++ | + |

3) Nichtionischer Emulgator NO1, gerechnet als Feststoff, bezogen auf Polymer.

4) + Ausbeute > 60 %;
++ Ausbeute > 75 %;
+++ Ausbeute > 90 %.

5) --- kein zusammenhängender Film;
-- vollständig rissig;
- großflächige Schwundrisse;
+ Schwundrisse am Rand;
++ mit Narben verfilmt;
+++ defektfreier, elastischer Film.

6) - sehr viel Sediment, klare Phasentrennung;
o Sediment;
+ kein Sediment.

**Patentansprüche**

1. Verfahren zur Herstellung von Polymerpulvern durch Verdampfen der flüchtigen Bestandteile aus wässrigen Dispersionen filmbildender Polymere P in Gegenwart von Trocknungshilfsmitteln T, die ausgewählt sind unter den Salzen von oligomeren Arylsulfonäure-Formaldehyd-Kondensationsprodukten, **dadurch gekennzeichnet, dass** die wässrige Polymerdispersion vor dem Verdampfen der flüchtigen Bestandteile wenigstens 1,5 Gew.-%, bezogen auf das Polymer in der Dispersion, wenigstens einer anionischen oberflächenaktiven Verbindung AO enthält, die wenigstens eine $C_6$-$C_{32}$-Alkylgruppe aufweist.

2. Verfahren nach Anspruch 1, **dadurch gekennzeichnet, dass** die Gesamtmenge an anionischer oberflächenaktiver Verbindung AO im Bereich von 1,5 bis 4 Gew.-%, bezogen auf das Polymer in der Dispersion, liegt.

3. Verfahren nach einem der vorhergehenden Ansprüche, **dadurch gekennzeichnet, dass** die anionische oberflächeaktive Verbindung AO wenigstens eine Sulfonat-Gruppe aufweist.

4. Verfahren nach Anspruch 3, **dadurch gekennzeichnet, dass** die anionische oberflächenaktive Verbindung AO ausgewählt ist unter Verbindungen der allgemeinen Formel I

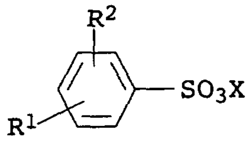

(I)

worin

$R^1$ für eine $C_6$-$C_{32}$-Alkylgruppe steht,
$R^2$ für Wasserstoff, $C_1$-$C_4$-Alkyl, einen annellierten Benzolring, der gegebenenfalls mit $C_1$-$C_4$-Alkyl substituiert ist, oder einen Phenoxyrest steht, der gegebenenfalls eine $C_6$-$C_{32}$-Alkylgruppe und/oder eine Sulfonat-Gruppe aufweist, und
X ein Kationenäquivalent bedeutet.

5. Verfahren nach Anspruch 3, **dadurch gekennzeichnet, dass** die anionische oberflächenaktive Verbindung AO ausgewählt ist unter $C_6$-$C_{32}$-Alkylsulfonaten.

6. Verfahren nach Anspruch 3, **dadurch gekennzeichnet, dass** die anionische oberflächenaktive Verbindung ausgewählt ist unter den Salzen von Di-$C_6$-$C_{32}$-alkylestern von sulfonierten gesättigten Dicarbonsäuren mit 3 bis 10 C-Atomen.

7. Verfahren nach einem der vorhergehenden Ansprüche, **dadurch gekennzeichnet, dass** das Trocknungshilfsmittel ausgewählt ist unter Phenolsulfonsäure-Formaldehyd-Kondensaten und Naphthalinsulfonsäure-Formaldehyd-Kondensaten mit einem zahlenmittleren Molekulargewicht $M_n$ unterhalb 1500 Dalton.

8. Verfahren nach einem der vorhergehenden Ansprüche, **dadurch gekennzeichnet, dass** die Polymerdispersion das Trocknungshilfsmittel T in einer Menge von 1 bis 50 Gew.-%, bezogen auf das Polymer, enthält.

9. Verfahren nach einem der vorhergehenden Ansprüche, **dadurch gekennzeichnet, dass** das Polymer in der Dispersion Styrol-Butadien-Copolymer ist.

10. Verfahren nach einem der vorhergehenden Ansprüche, **dadurch gekennzeichnet, dass** das Polymer in der Dispersion eine Glasübergangstemperatur Tg unterhalb 65 °C aufweist.

11. Verfahren nach einem der vorhergehenden Ansprüche, **dadurch gekennzeichnet, dass** die Polymerdispersion zusätzlich wenigstens einen nichtionischen Emulgator in einer Menge bis 10 Gew.-%, bezogen auf das Polymer enthält.

12. Verfahren nach einem der vorhergehenden Ansprüche, **dadurch gekennzeichnet, dass** das Verdampfen der flüchtigen Bestandteile aus der wässrigen Polymerdispersion nach einem Sprühtrocknungsverfahren erfolgt.

13. Polymerpulver, erhältlich durch ein Verfahren gemäss einem der Ansprüche 1 bis 11.

14. Polymerpulver nach Anspruch 11, umfassend:

    i wenigstens ein filmbildendes Polymer P,
    ii 1 bis 50 Gew.-%, bezogen auf das Polymer P, wenigstens eines Trocknungshilfsmittels T
    iii wenigstens 1,5 Gew.-%, bezogen auf das Polymer P, wenigstens einer anionischen oberflächenaktiven Verbindung AO,
    iv gegebenenfalls neutrale oberflächenaktive Verbindungen in einer Menge bis 10 Gew.-%, bezogen auf das Polymer P, und
    v gegebenenfalls Füllstoffe, Pigmente, Anticakingmittel und/oder übliche Hilfsmittel.

15. Verwendung des Polymerisatpulvers nach Anspruch 13 oder 14 als Cobindemittel in mineralischen Bindebaustoffen und gebrauchsfertigen Bindebaustoffzubereitungen, als Bindemittel in Anstrichmitteln, Lacken, Klebstoffen, Beschichtungs- und Dichtungsmassen, Bauklebstoffen und in Kunstharzputzen.

16. Mineralischer Bindebaustoff, enthaltend wenigstens ein Polymerpulver gemäß einem der Ansprüche 13 oder 14.

17. Mineralischer Bindebaustoff nach Anspruch 16 in Form einer Trockenmörtelzubereitung, bestehend aus

    - 10 bis 60 Gew.-% mineralisches Bindemittel,
    - 0,1 bis 20 Gew.-% Polymerpulver gemäß einem der Ansprüche 13 oder 14,
    - bis zu 25 Gew.-% für mineralische Bindebaustoffe übliche Hilfsmittel und
    - als Restmenge Zuschläge wie Sand, Füllstoffe, Pigmente, natürliche Fasern und/oder synthetische Fasern.

18. Mineralischer Bindebaustoff nach Anspruch 16 in Form einer Bauklebstoff-Trockenzubereitung bestehend aus

    - 15 bis 50 Gew.-% mineralisches Bindemittel
    - 0,5 bis 10 Gew.-% Polymerpulver, gemäß einem der Ansprüche 13 oder 14
    - 0,1 bis 25 Gew.-% für Bauklebstoffe übliche Hilfsmittel
    - 30 bis 80 Gew.-% für Bauklebstoffe übliche Zuschläge